# FASCICULE DE BREVET EUROPEEN

(11) **EP 3 073 551 B1**
(45) Date de publication et mention de la délivrance du brevet: **06.02.2019**
(21) Numéro de dépôt: 16162326.9
(22) Date de dépôt: 24.03.2016
(51) Int. Cl.: H01M 2/22, H01M 2/26, H01M 2/30

(54) **GÉNÉRATEUR ÉLECTROCHIMIQUE**
ELEKTROCHEMISCHER GENERATOR
ELECTROCHEMICAL GENERATOR

(30) Priorité: 27.03.2015 FR 1552614
(43) Date de publication de la demande: 28.09.2016
(73) Titulaire: SAFT, 93170 Bagnolet (FR)
(72) Inventeur: BOISSOUT, Jérome, 33290 PAREMPUYRE (FR); BEUGNON, Alexandre, 33290 LUDON MEDOC (FR)
(74) Mandataire: Hirsch & Associés

(56) Documents cités:
- EP-A2- 2 733 778
- WO-A1-2014/002227
- CN-A- 102 104 134
- US-A1- 2006 040 179

## Description

### DOMAINE TECHNIQUE

Le domaine technique de l'invention est celui des procédés de traitement de surface visant à améliorer la qualité de la soudure entre deux pièces métalliques destinées à être soudées entre elles à l'aide d'un laser.

### ETAT DE LA TECHNIQUE

La technologie des générateurs électrochimiques de type lithium-ion utilise généralement un feuillard mince en cuivre comme support des électrodes négatives. Ce feuillard est enduit d'une pâte comprenant la matière électrochimiquement active. Les extrémités du feuillard ne sont pas recouvertes de matière électrochimiquement active sur une portion de quelques millimètres de longueur. Cette portion est utilisée pour souder le feuillard à une pièce de connexion en cuivre dont le rôle est de collecter le courant issu des électrodes. Cette pièce de connexion se présente généralement sous la forme d'une lamelle (ou languette) de cuivre dont l'une des extrémités est soudée au feuillard des électrodes négatives tandis que l'autre extrémité est soudée à une borne de sortie de courant négative du générateur, qui est généralement aussi en cuivre.

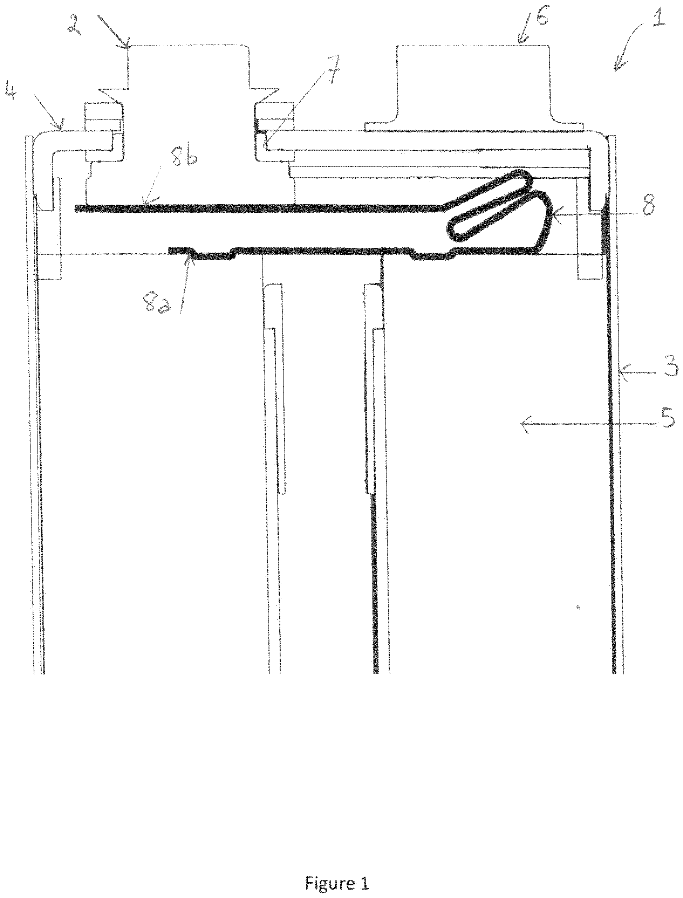

La Figure 1 représente schématiquement le principe de connexion des extrémités des électrodes négatives d'un générateur lithium-ion (1) à une borne de sortie de courant (2) négative. Le générateur comprend un conteneur (3) de format cylindrique obturé à l'une de ses extrémités par un couvercle (4). Le conteneur renferme un faisceau électrochimique (5) qui est obtenu par l'enroulement d'une alternance d'électrodes positives et négatives séparées par un séparateur. Le couvercle sert de support à deux bornes de sortie de courant, l'une positive (6) soudée directement sur le couvercle, l'autre négative (2) traversant la paroi du couvercle et isolée électriquement du couvercle par un joint (7). La borne positive (6) est reliée électriquement aux électrodes positives par l'intermédiaire du conteneur. La borne de sortie négative (2) est reliée électriquement aux électrodes négatives par l'intermédiaire d'une pièce de connexion (8) qui est une languette métallique présentant plusieurs zones de courbure. Une des extrémités de la languette (8a) est reliée aux feuillards des électrodes négatives. L'autre extrémité (8b) est reliée à la borne de sortie de courant négative (2).

La soudure des extrémités (8a, 8b) de la pièce de connexion soit aux électrodes (5), soit à la borne de sortie de courant négative (2) est généralement réalisée à l'aide d'un laser. Le rayon laser est dirigé perpendiculairement à la surface de la pièce de connexion. L'énergie apportée par le rayon laser fait fondre la zone de contact entre l'extrémité (8a) de la pièce de connexion et la portion du feuillard des électrodes non recouverte de matière active, ou entre l'autre extrémité (8b) de la pièce de connexion et la borne de sortie de courant. La solidification de la zone de contact fondue permet d'obtenir une connexion électrique entre les électrodes et la borne de sortie de courant. La soudure doit être de bonne qualité pour résister aux vibrations et aux chocs que subit le générateur au cours de son utilisation. Une soudure de bonne qualité participe à la fiabilité électrique et mécanique du générateur.

Or, le procédé de soudage de pièces en alliages cuivreux ou des cuivres purs par un laser ne donne pas toujours des résultats satisfaisants. En effet, la majorité des faisceaux laser permettant de souder des composants métalliques, d'épaisseurs comprises entre 0,1 millimètre et plusieurs millimètres, possèdent une longueur d'onde d'environ 1063 nm. A cette longueur d'onde, des études ont démontré que des cuivres purs (type Cua1, CuB1 ou Cuc1) possédaient une absorptivité (1 - réflectivité) comprise entre quelques % et environ 20 % maximum. Une partie de l'énergie émise par le faisceau laser n'est donc plus absorbée par le cuivre, ce qui a pour conséquence de réduire la profondeur de pénétration du faisceau laser et de réduire l'efficacité du procédé de soudage. La technique de soudage par laser de pièces en alliages cuivreux ou des cuivres purs n'est donc pas privilégiée par rapport à des techniques comme la soudure par ultrasons ou par contact électrique.

Pour pallier cette difficulté, il a été proposé d'utiliser une pièce de nickel que l'on vient interposer entre la pièce en cuivre et le rayon laser afin de « tromper » le laser et transmettre l'énergie thermique du laser vers le cuivre à souder. Cette solution est décrite dans le document EP-A-1 653 530. Or, elle présente le désavantage de faire intervenir une ou plusieurs pièces supplémentaires en nickel lors de la fabrication du générateur. Ces pièces ne sont pas nécessaires au fonctionnement du générateur et elles augmentent son coût, car elles restent sur le générateur, une fois celui-ci fabriqué.

Pour réduire le nombre de pièces impliquées dans la fabrication du générateur, il a été proposé d'utiliser une seule pièce de connexion en cuivre comprenant une partie dans laquelle du cuivre est colaminé avec du nickel. Cette solution est décrite dans le document EP-A-2 093 820. La partie colaminée peut être située soit à l'extrémité de la pièce de connexion qui vient se souder aux feuillards en cuivre des électrodes, soit à celle qui vient se souder au pied de la borne de sortie de courant en cuivre, soit aux deux extrémités à la fois.

Le document CN 102 104 134 A décrit une pièce de connexion en cuivre fixée à une électrode par compression/emboutissage. L'étape de compression/emboutissage ne provoque pas la fusion du cuivre, contrairement à une soudure par faisceau laser.

Les documents US 2006/0040179, EP 2 733 778 et WO 2014/002227 décrivent des procédés de connexion de pièces d'un générateur lithium-ion. Ces pièces sont constituées de nickel ou d'aluminium.

On cherche encore à améliorer l'efficacité du procédé de soudage entre deux pièces de cuivre, sans avoir à recourir à des pièces supplémentaires.

Par ailleurs, il a été constaté que pour un même grade de cuivre, deux échantillons peuvent présenter des brillances différentes selon leur état de surface. Le degré d'absorption du faisceau laser par le cuivre varie de manière inversement proportionnelle à sa brillance. Plus le cuivre est brillant, plus sa réflectivité est élevée, et donc moindre est la quantité d'énergie absorbée. Si la quantité d'énergie absorbée par le cuivre est insuffisante pour provoquer la fusion de la zone de contact entre les deux pièces à souder, la soudure ne se produit pas. Un opérateur devrait donc en principe ajuster la puissance du rayon laser en fonction du degré de brillance de la pièce en cuivre recevant le rayon laser. En pratique, cet ajustement n'est pas réalisé et le laser est simplement réglé au maximum de sa puissance. On cherche donc un moyen d'éviter d'utiliser le laser à sa pleine puissance et de disposer d'une marge d'ajustement de sa puissance.

### RESUME DE L'INVENTION

L'invention a pour objet un générateur électrochimique comprenant une pièce de connexion telle que décrite ci-dessous. A cet effet, l'invention propose une pièce de connexion pour connecter des électrodes d'un générateur électrochimique à une borne de sortie de courant du générateur électrochimique, ladite pièce présentant une surface dont au moins une portion comprend une pluralité d'empreintes espacées de façon régulière selon deux directions situées dans le plan défini par ladite surface.

La pièce de connexion est une lamelle métallique présentant deux faces, la première face comportant la pluralité d'empreintes et la seconde face étant destinée à être soudée à la borne de sortie de courant.

Selon un mode de réalisation, les empreintes ont une section triangulaire, demi-sphérique, trapézoïdale, rectangulaire ou carré, pour une vue selon une coupe transversale de la pièce de connexion. De préférence, la section est triangulaire.

Selon un mode de réalisation, les empreintes sont espacées d'une même distance.

Selon un mode de réalisation, la profondeur des empreintes est supérieure ou égale à 50 µm, de préférence supérieure ou égale à 100 µm.

Selon un mode de réalisation, l'aire de chaque empreinte mesurée au niveau de surface de la pièce de connexion est supérieure à 10⁻² mm².

La pièce de connexion comprend du cuivre ou un alliage à base de cuivre.

Selon un mode de réalisation, la surface comprenant la pluralité d'empreintes a été obtenue par emboutissage.

Le générateur comprend une borne de sortie de courant comprenant du cuivre ou un alliage à base de cuivre.

La pièce de connexion comprend du cuivre ou un alliage à base de cuivre et est soudée par soudage laser à :
- au moins un feuillard comprenant du cuivre ou un alliage à base de cuivre d'une électrode du générateur électrochimique et/ou
- à une borne de sortie de courant comprenant du cuivre ou un alliage à base de cuivre.

Selon un mode de réalisation, le générateur est de type lithium-ion.

L'invention a également pour objet un procédé de fabrication d'une connexion électrique entre :
- une pièce de connexion et au moins un feuillard d'une électrode d'un générateur électrochimique et/ou
- une pièce de connexion et une borne de sortie de courant du générateur électrochimique, ledit procédé comprenant les étapes de:
   a) mise à disposition d'une pièce de connexion,
   b) création par emboutissage d'une pluralité d'empreintes sur au moins une portion d'une surface de la pièce de connexion, les empreintes étant espacées de façon régulière dans deux directions situées dans le plan défini par la surface ;
   c) mise en contact d'une surface de la pièce de connexion, opposée à la surface ayant subi l'emboutissage, avec une borne de sortie de courant du générateur électrochimique et/ou au moins un feuillard d'une électrode du générateur électrochimique,
   d) émission d'un rayon laser dirigé sur la surface de la pièce de connexion ayant été emboutie.

La pièce de connexion comprend du cuivre ou un alliage à base de cuivre ;
- la borne de sortie de courant et/ou le feuillard de l'électrode comprend du cuivre ou un alliage à base de cuivre ;
- Selon un mode de réalisation, empreintes sont de section triangulaire, pour une vue selon une coupe transversale de la pièce de connexion.

Selon un mode de réalisation, l'aire de la portion emboutie est supérieure ou égale à l'aire de la surface recevant le rayon laser à l'étape d).

L'invention consiste à modifier mécaniquement l'état de surface de la pièce de connexion, de préférence en cuivre, en réalisant à l'emplacement de la zone de soudure, par exemple par un procédé d'emboutissage, une pluralité d'empreintes espacées de façon régulière. La présence de ces empreintes a pour effet d'augmenter le pourcentage d'énergie thermique absorbée par la pièce de connexion et ainsi augmenter l'énergie transmise au bain de soudure.

### FIGURES

La Figure 1 représente schématiquement la connexion des extrémités des électrodes négatives (5) d'un générateur lithium-ion (1) à une borne de sortie de courant (2) négative.
La Figure 2 représente schématiquement après grossissement la surface d'une pièce de connexion (8) emboutie par un poinçon de forme pyramidale (9) à quatre côtés.
La Figure 3a est une représentation schématique de l'énergie réfléchie et de l'énergie absorbée par la pièce de connexion (8) dans le cas où la surface de celle-ci n'a pas été modifiée.
La Figure 3b est une représentation schématique de l'énergie réfléchie et de l'énergie absorbée par la pièce de connexion (8) dans le cas où celle-ci a été emboutie par un poinçon de forme pyramidale.
La Figure 4 représente à un grossissement d'environ 200 fois une vue de la surface d'une pièce de connexion ayant subi un traitement mécanique par emboutissage visant à augmenter la rugosité de la surface de la pièce à souder. Le poinçon a été traité par électroérosion. Ce procédé ne fait pas partie de l'invention.
La Figure 5 représente à un grossissement d'environ 200 fois une vue de la surface d'une pièce de connexion ayant subi un traitement mécanique d'emboutissage (9) selon l'invention.

### EXPOSE DE MODES DE REALISATION

L'invention consiste à créer à la surface de la pièce de connexion une pluralité d'empreintes espacées de façon régulière dans au moins deux directions situées dans le plan défini par la surface de la pièce de connexion. Cette pluralité d'empreintes peut être obtenue par emboutissage d'au moins une portion de la surface de la pièce de connexion. Différentes formes d'empreintes sont envisageables en fonction de la forme du poinçon utilisé, parmi lesquelles on peut citer les formes pyramidale, demi-sphérique, trapézoïdale, cubique ou parallélépipédique. La forme pyramidale est préférée. La base de la pyramide peut être un polygone régulier de 3, 4 ou 5 côtés. De préférence, la pyramide est une pyramide carrée (base à 4 côtés) car cette forme permet une meilleure réduction de la réflexion du faisceau laser et donc une meilleure absorption.

Par le terme "empreintes réparties de façon régulière à la surface de la pièce de connexion", on entend une répétition d'empreintes espacées d'une même distance. Cela permet d'obtenir un état de surface de la pièce de connexion homogène.

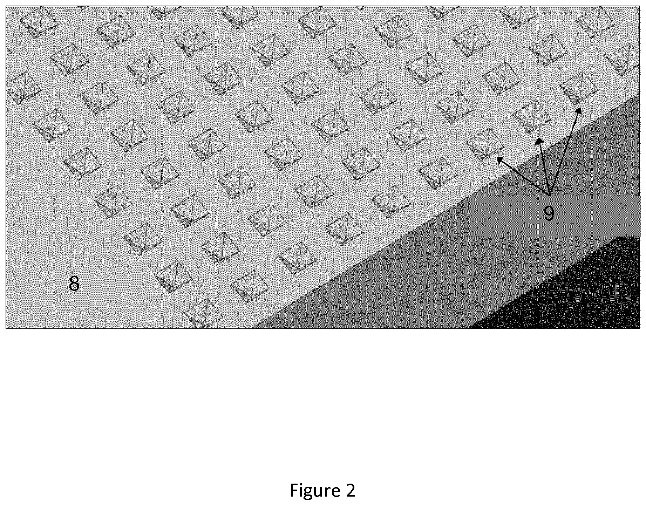

La figure 2 représente schématiquement après grossissement la surface de la pièce de connexion (8) emboutie par un poinçon de forme pyramidale à quatre côtés. Les empreintes (9) de forme pyramidale sont régulièrement réparties à la surface de la pièce de connexion. La section de l'empreinte (9) est de forme triangulaire, pour une vue selon une coupe transversale de la pièce de connexion.

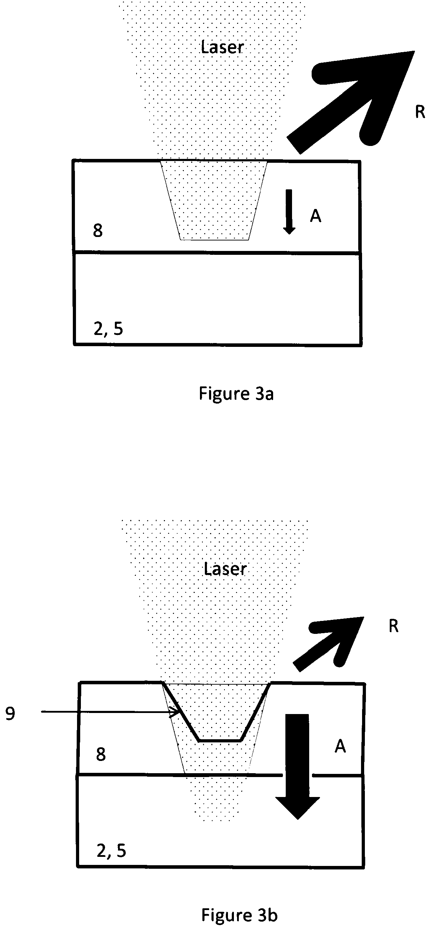

En modifiant l'état de surface de la pièce de connexion, il a été découvert que la réflexion du rayon laser par la pièce de connexion était réduite et donc que la quantité d'énergie thermique absorbée par celle-ci était augmentée. Les Figures 3a et 3b illustrent ce phénomène. Sur la Figure 3a, on distingue une pièce supérieure qui symbolise la pièce de connexion (8) et une pièce inférieure qui symbolise soit la borne de sortie négative (2), soit l'extrémité d'un feuillard d'électrode négative (5). Le rayon laser arrive quasi-perpendiculairement à la pièce de connexion. En raison de la brillance de la pièce de connexion, une partie significative de l'énergie du laser est réfléchie (R). La quantité d'énergie absorbée (A) est insuffisante pour entrainer la fusion de la zone de contact entre la pièce supérieure et la pièce inférieure. Dans la situation illustrée à la Figure 3b, la pièce de connexion a subi un emboutissage. La section de l'empreinte (9) formée par le poinçon est de forme trapézoïdale, pour une vue selon une coupe transversale de la pièce de connexion. Cette figure montre que l'énergie absorbée s'étend jusqu'à la pièce inférieure permettant ainsi une fusion des pièces supérieure et inférieure à l'emplacement de la zone de contact.

Les empreintes formées sur la pièce de connexion présentent de préférence une profondeur supérieure ou égale à 50 µm, de préférence supérieure ou égale à 100 µm.

De préférence, l'aire de chaque empreinte mesurée au niveau de surface de la pièce de connexion est supérieure à 10⁻² mm². Par exemple, dans le cas d'un poinçon de forme pyramidale, l'empreinte du poinçon sur la surface de la pièce de connexion est un carré dont le côté peut mesurer au moins 100 µm.

Dans un mode de réalisation, la distance entre les bords les plus proches de deux empreintes voisines est constante. De préférence, la distance entre les bords les plus proches de deux empreintes voisines va de 1 µm à 100 µm.

La répartition des empreintes à la surface de la pièce de connexion est homogène. L'invention exclut donc un traitement mécanique de la surface de la pièce de connexion qui confèrerait une répartition aléatoire des empreintes. Tel est le cas d'un traitement de surface par abrasion, polissage ou par emboutissage obtenu par un poinçon dont la surface a été traitée au préalable par électroérosion.

La pièce de connexion présente le plus souvent la forme d'une lamelle métallique, d'épaisseur allant de 500 µm à 1 mm, de préférence de 520 µm à 640 µm.

De préférence, la pièce de connexion et la pièce à laquelle la pièce de connexion doit être soudée sont en cuivre ou faite d'un alliage à base de cuivre. Le cuivre peut être de type Cua1 (Cu-ETP, pureté : 99,9% de cuivre minimum), de type Cub1 (Cu-DHP, pureté 99,9% de cuivre minimum, présence résiduelle de phosphore) ou de type Cuc1 (Cu-OF, désoxydé, pureté 99,95% de cuivre minimum).

On pratique l'emboutissage sur la face de la lamelle destinée à recevoir le faisceau laser lors de l'étape ultérieure de soudage. La face opposée à celle recevant le faisceau laser est celle qui est destinée à être soudée. On entend par face opposée, la face de la pièce de connexion qui est située dans un plan parallèle à la face recevant l'impact du faisceau laser et qui serait traversée par le rayon laser en prolongeant de manière fictive la trajectoire du faisceau laser.

L'emboutissage peut être pratiqué à l'extrémité de la pièce de connexion destinée à être soudée, soit à la borne de sortie de courant, c'est-à-dire l'extrémité 8b sur la figure 1, soit à l'extrémité des feuillards des électrodes non recouverte de matière électrochimiquement active, c'est-à-dire l'extrémité 8a sur la figure 1. Dans un mode de réalisation, l'emboutissage est pratiqué aux deux extrémités 8a et 8b.

Après l'emboutissage, l'étape de soudage peut être réalisée à l'aide d'un laser de type Nd : YAG (grenat d'yttrium-aluminium dopé au néodyme) de type continu possédant un faisceau de longueur d'onde infrarouge de 1063 nm. L'aspect d'une soudure réalisée par laser se distingue aisément de celui d'une soudure réalisée par d'autres techniques de soudure, telle que la soudure par ultra-sons ou la soudure par résistance. En effet, lorsque la soudure est réalisée à l'aide d'un rayon laser, on observe une ligne de matière fondue dont le tracé correspond au déplacement du faisceau laser. En revanche, lorsque la soudure est réalisée par ultrasons, la partie soudée montre un écrasement de matière sans fusion. Lorsque la soudure est réalisée par résistance, on distingue des points de fusion. L'homme du métier peut donc aisément, par simple observation de la zone de soudure différencier si la soudure a été réalisée par laser, par ultrasons ou par résistance.

L'avantage principal de l'invention est de permettre une réduction de la quantité d'énergie nécessaire pour obtenir une soudure de même qualité.

Un avantage découlant de ce principal avantage est un échauffement moindre des constituants du générateur se situant à proximité de la zone de soudure, et donc une réduction du risque de les endommager par brûlure.

Un autre avantage en découlant est que la marge d'ajustement du procédé de soudage est augmentée, c'est-à-dire qu'il est possible d'augmenter la puissance du laser si nécessaire. En effet, jusqu'à présent, la variabilité des conditions de livraison de la pièce de connexion conduisait à des soudures de qualité hétérogène entre les différents lots. Cette variabilité obligeait l'opérateur à utiliser une puissance de soudure très élevée, proche de la puissance maximale du laser. L'invention permet de garder une marge de puissance.

La soudure obtenue par le procédé selon l'invention est de bonne qualité, c'est-à-dire qu'elle résiste aux vibrations et aux chocs que subit le générateur au cours de son utilisation. Le générateur comprenant une telle soudure présente donc une meilleure fiabilité électrique et mécanique.

### EXEMPLES

### ESSAIS A (COMPARATIF)

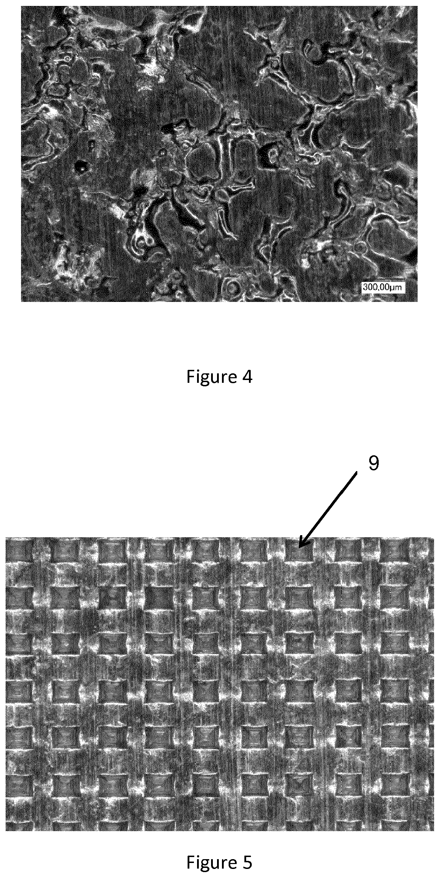

On a fait subir à une pièce de connexion en cuivre un traitement mécanique permettant d'augmenter localement la rugosité de sa surface. Il s'agit d'un traitement par emboutissage, dans lequel la surface du poinçon a été traitée par électroérosion. On observe la formation d'une rugosité hétérogène. La rugosité obtenue (Ra, moyenne arithmétique des valeurs absolues) est comprise entre 1,3 µm et 2,7 µm. La Figure 4 représente une vue au microscope optique de la surface de la pièce de connexion après traitement. Les empreintes ont une disposition aléatoire. La pièce de connexion a été soudée par laser à une pièce en cuivre. La soudure obtenue n'est pas satisfaisante.

### ESSAIS B

Des essais de soudage ont été effectués sur :
- sept pièces de connexion en cuivre non traitées (standard).
- sept pièces de connexion en cuivre ayant subi un traitement de surface sous la forme d'un emboutissage à l'aide d'un poinçon de forme pyramidale (selon l'invention).

Le Tableau 1 ci-dessous indique la moyenne des résultats obtenus. Il montre que l'emboutissage permet une amélioration significative de la longueur de soudure.

**Tableau 1**

| | Longueur moyenne de soudure (mm) | Longueur minimale de soudure (mm) | Longueur maximale de soudure (mm) |
|---|---|---|---|
| Standard | 23,47 | 11,29 | 35,40 |
| Selon l'invention | 33,33 | 24,80 | 36,00 |

### ESSAIS C

Des essais de soudure ont été réalisés sur:
- des échantillons de pièces de connexion possédant un grade de cuivre CuC1, présentant un faible coefficient d'absorption et n'ayant pas subi d'emboutissage (standard);
- des échantillons de pièces de connexion possédant un grade de cuivre CuC1 ayant subi un emboutissage par un poinçon de forme pyramidale sur la zone de soudure. La section de l'empreinte (9) est de forme triangulaire, pour une vue selon une coupe transversale de la pièce de connexion.

La Figure 5 représente une vue de la surface de ces pièces de connexion. La pluralité d'empreintes (9) réparties de façon régulière est visible.

Dans une première série d'essais de soudure comparatifs, on a quantifié l'augmentation de la longueur de soudure sous l'effet de l'emboutissage. Les paramètres de soudure sont identiques pour les deux types d'échantillons et les longueurs soudées sont mesurées et comparées. Les tests ont été réalisés sur 10 échantillons standards et 20 échantillons ayant subi un emboutissage par un poinçon de forme pyramidale

Dans une seconde série d'essais, dits "essais de sensibilité", on a mesuré le niveau énergétique minimum requis pour obtenir un cordon de soudure complet, tel qu'il est requis, sur les échantillons standards et sur les pièces traitées avec les empreintes pyramidales. Ce niveau énergétique minimum reflète la capacité du cuivre à absorber le faisceau laser. L'objet de cette seconde série d'essais a été de comparer les niveaux énergétiques minimum requis pour obtenir une soudure conforme. Cette série a été réalisée en débutant les soudures avec une puissance du laser faible. Puis, tout en conservant l'ensemble des autres paramètres de soudure inchangés (vitesse, focale, géométrie...), la puissance de soudure a été incrémentée de 100W jusqu'à obtenir une section de soudure complète. La seconde série d'essais a été réalisée sur 8 échantillons standards et 35 échantillons ayant subi un emboutissage par un poinçon de forme pyramidale.

### Résultats:

La première série de test a permis de mettre en évidence l'efficacité du traitement pyramidal avec 100% de longueur de cordon soudé par rapport à la spécification nominale. Les échantillons standards ont quant à eux une moyenne de longueur de cordons soudés de 73%, avec en particulier un échantillon soudé à hauteur de seulement 13,9%. (Tableau 2)

**Tableau 2**

| N° échantillon | Etat | Pourcentage de longueur soudée par rapport à la spécification nominale (%) |
|---|---|---|
| 1 | Standard | 86,1 |
| 2 | Standard | 63,9 |
| 3 | Standard | 83,3 |
| 4 | Standard | 100,0 |
| 5 | Standard | 13,9 |
| 6 | Poinçon pyramidal | 100,0 |
| 7 | Poinçon pyramidal | 100,0 |
| 8 | Poinçon pyramidal | 100,0 |
| 9 | Poinçon pyramidal | 100,0 |
| 10 | Poinçon pyramidal | 100,0 |
| 11 | Standard | 97,2 |
| 12 | Standard | 77,8 |
| 13 | Standard | 100,0 |
| 14 | Poinçon pyramidal | 100,0 |
| 15 | Poinçon pyramidal | 100,0 |
| 16 | Poinçon pyramidal | 100,0 |
| 17 | Poinçon pyramidal | 100,0 |
| 18 | Poinçon pyramidal | 100,0 |
| 19 | Poinçon pyramidal | 100,0 |
| 20 | Poinçon pyramidal | 100,0 |
| 21 | Poinçon pyramidal | 100,0 |
| 22 | Poinçon pyramidal | 100,0 |
| 23 | Poinçon pyramidal | 100,0 |
| 24 | Poinçon pyramidal | 100,0 |
| 25 | Standard | 72,2 |
| 26 | Standard | 36,1 |
| 27 | Poinçon pyramidal | 100,0 |
| 28 | Poinçon pyramidal | 100,0 |
| 29 | Poinçon pyramidal | 100,0 |
| 30 | Poinçon pyramidal | 100,0 |
| Moyenne des échantillons ayant subi l'emboutissage avec poinçon pyramidal | | 100 |
| Moyenne des échantillons standards | | 73,06 |
| Minimum des échantillons standards | | 13,9 |

La seconde série de tests a permis de comparer les niveaux énergétiques minimums requis pour une soudure conforme.

Les essais avec les échantillons standards n'ont pas permis d'obtenir une longueur de soudure conforme avec les paramètres de soudure de cet essai : le Tableau 3 ci-dessous montre en effet d'une part que l'aspect de la soudure n'est pas conforme et d'autre part que la longueur de soudure atteint au plus 95% de la longueur de soudure nominale pour une puissance X+700 W. Seule une puissance du laser de X + 1300 W permet d'obtenir une soudure conforme. Or, cette puissance correspond à la puissance maximale du laser utilisé. La marge d'ajustement du procédé est donc nulle.

En revanche, les essais réalisés sur les échantillons ayant subi un emboutissage montre qu'il est possible d'obtenir une soudure conforme à partir de X + 400 W, donc bien inférieure à X+1300 W. Le Tableau 3 montre que l'aspect de la soudure est conforme pour les valeurs de puissance allant de X+400 W à X+700 W. De plus, la longueur de soudure est toujours égale à 100% pour une puissance située dans cette gamme.

**Tableau 3**

| | **Essai 1** | | **Essai 2** | | **Essai 3** | | **Essai 4** | |
|---|---|---|---|---|---|---|---|---|
| | X Watts + 700 Watts | | X Watts + 600 Watts | | X Watts + 500 Watts | | X Watts + 400 Watts | |
| | aspect | longueur de soudure | aspect | longueur de soudure | aspect | longueur de soudure | aspect | longueur de soudure |
| S* | non conforme | 95% | non conforme | 95% | non conforme | 90% | non conforme | 90% |
| P** | **conforme** | **100%** | **conforme** | **100%** | **conforme** | **100%** | **conforme** | **100%** |

| | **Essai 5** | | **Essai 6** | | **Essai 7** | | **Essai 8** | |
|---|---|---|---|---|---|---|---|---|
| | X Watts + 300 Watts | | X Watts + 200 Watts | | X Watts + 100 Watts | | X Watts | |
| | aspect | longueur de soudure | aspect | longueur de soudure | aspect | longueur de soudure | aspect | longueur de soudure |
| S* | non conforme | 90% | non conforme | 85% | non conforme | 70% | non conforme | 15% |
| P** | non conforme | 95% | non conforme | 90% | non conforme | 85% | non conforme | 50% |

| | | | | | | | | |
|---|---|---|---|---|---|---|---|---|
| * S=Standard **P= poinçon pyramidal | | | | | | | | |

## Revendications

1. Générateur électrochimique comprenant :
a) une borne de sortie de courant (2) comprenant du cuivre ou un alliage à base de cuivre ;
b) une pièce de connexion (8) pour connecter des électrodes (5) du générateur électrochimique (1) à la borne de sortie de courant (2) du générateur électrochimique, ladite pièce de connexion comprenant du cuivre ou un alliage à base de cuivre et étant soudée par soudage laser à :
- au moins un feuillard comprenant du cuivre ou un alliage à base de cuivre d'une électrode du générateur électrochimique et/ou
- à la borne de sortie de courant,
ladite pièce de connexion présentant :
- une première surface dont au moins une portion comprend une pluralité d'empreintes (9) espacées de façon régulière selon deux directions situées dans le plan défini par ladite surface,
- une seconde surface opposée à la première surface, en contact avec ledit au moins un feuillard et/ou avec ladite borne de sortie de courant,
le soudage laser ayant lieu sur la pluralité d'empreintes.

2. Générateur électrochimique selon la revendication 1, dans lequel la pièce de connexion est une lamelle métallique présentant deux faces, la première face comportant la pluralité d'empreintes et la seconde face étant soudée à la borne de sortie de courant.

3. Générateur électrochimique selon la revendication 1 ou 2, dans lequel les empreintes ont une section triangulaire, demi-sphérique, trapézoïdale, rectangulaire ou carré, pour une vue selon une coupe transversale de la pièce de connexion.

4. Générateur électrochimique selon l'une des revendications 1 à 3, dans lequel les empreintes ont une section triangulaire, pour une vue selon une coupe transversale de la pièce de connexion.

5. Générateur électrochimique selon l'une des revendications précédentes, dans lequel les empreintes sont espacées d'une même distance.

6. Générateur électrochimique selon l'une des revendications précédentes, dans lequel la profondeur des empreintes est supérieure ou égale à 50 µm, de préférence supérieure ou égale à 100 µm.

7. Générateur électrochimique selon l'une des revendications précédentes, dans lequel l'aire de chaque empreinte mesurée au niveau de surface de la pièce de connexion est supérieure à 10⁻² mm².

8. Générateur électrochimique selon l'une des revendications 1 à 7, de type lithium-ion.

9. Procédé de fabrication d'une connexion électrique entre :
- une pièce de connexion (8) et au moins un feuillard d'une électrode (5) d'un générateur électrochimique (1) ou
- une pièce de connexion (8) et une borne de sortie de courant (2) du générateur électrochimique, ledit procédé comprenant les étapes de :
a) mise à disposition d'une pièce de connexion comprenant du cuivre ou un alliage à base de cuivre,
b) création par emboutissage d'une pluralité d'empreintes sur au moins une portion d'une surface de la pièce de connexion, les empreintes étant espacées de façon régulière dans deux directions situées dans le plan défini par la surface ;
c) mise en contact d'une surface de la pièce de connexion, opposée à la surface ayant subi l'emboutissage, avec une borne de sortie de courant du générateur électrochimique, la borne de sortie de courant comprenant du cuivre ou un alliage à base de cuivre ou au moins un feuillard comprenant du cuivre ou un alliage à base de cuivre d'une électrode du générateur électrochimique,
d) émission d'un rayon laser dirigé sur la surface de la pièce de connexion ayant été emboutie.

10. Procédé selon la revendication 9, dans lequel les empreintes sont de section triangulaire, pour une vue selon une coupe transversale de la pièce de connexion.

11. Procédé selon l'une des revendications 9 à 10, dans lequel l'aire de la portion emboutie est supérieure ou égale à l'aire de la surface recevant le rayon laser à l'étape d).

## Patentansprüche

1. Elektrochemischer Generator, umfassend:
a) eine Stromausgangsklemme (2), umfassend Kupfer oder eine Legierung auf Kupferbasis,
b) ein Anschlussstück (8), um Elektroden (5) des elektrochemischen Generators (1) an die Stromausgangsklemme (2) des elektrochemischen Generators anzuschließen, wobei das Anschlussstück Kupfer oder eine Legierung auf Kupferbasis umfasst und durch Laserschweißen geschweißt ist an:
- mindestens ein Band, umfassend Kupfer oder eine Legierung auf Kupferbasis, einer Elektrode des elektrochemischen Generators und/oder
- die Stromausgangsklemme,
wobei das Anschlussstück aufweist:
- eine erste Oberfläche, wovon mindestens ein Abschnitt mehrere Abdrücke (9) aufweist, die regelmäßig in zwei Richtungen, die sich in der Ebene befinden, die von der Oberfläche definiert ist, beabstandet sind,
- eine zweite Oberfläche, die der ersten Oberfläche gegenüberliegt, in Kontakt mit dem mindestens einen Band und/oder mit der Stromausgangsklemme,
wobei das Laserschweißen auf den mehreren Abdrücken stattfindet.

2. Elektrochemischer Generator nach Anspruch 1, wobei das Anschlussstück eine metallische Lamelle ist, die zwei Seiten aufweist, wobei die erste Seite die mehreren Abdrücke aufweist und die zweite Seite an die Stromausgangsklemme geschweißt ist.

3. Elektrochemischer Generator nach Anspruch 1 oder 2, wobei die Abdrücke einen dreieckigen, halbkugelförmigen, trapezförmigen, rechteckigen oder quadratischen Querschnitt für eine Ansicht in einem Querschnitt des Anschlussstücks aufweisen.

4. Elektrochemischer Generator nach einem der Ansprüche 1 bis 3, wobei die Abdrücke einen dreieckigen Querschnitt für eine Ansicht in einem Querschnitt des Anschlussstücks aufweisen.

5. Elektrochemischer Generator nach einem der vorhergehenden Ansprüche, wobei die Abdrücke um einen gleichen Abstand beabstandet sind.

6. Elektrochemischer Generator nach einem der vorhergehenden Ansprüche, wobei die Tiefe der Abdrücke größer als oder gleich 50 µm, vorzugsweise größer als oder gleich 100 µm ist.

7. Elektrochemischer Generator nach einem der vorhergehenden Ansprüche, wobei die Fläche von jedem Abdruck, gemessen an der Oberfläche des Anschlussstücks, größer als 10⁻² mm² ist.

8. Elektrochemischer Generator nach einem der Ansprüche 1 bis 7 vom Lithiumionentyp.

9. Verfahren zur Herstellung eines elektrischen Anschlusses zwischen:
- einem Anschlussstück (8) und mindestens einem Band einer Elektrode (5) eines elektrochemischen Generators (1) oder
- einem Anschlussstück (8) und einer Stromausgangsklemme (2) des elektrochemischen Generators, wobei das Verfahren die Schritte aufweist des:
a) Bereitstellens eines Anschlussstücks, umfassend Kupfer oder eine Legierung auf Kupferbasis,
b) Erstellens durch Tiefziehen von mehreren Abdrücken auf mindestens einem Abschnitt einer Oberfläche des Anschlussstücks, wobei die Abdrücke regelmäßig in zwei Richtungen, die sich in der Ebene befinden, die von der Oberfläche definiert ist, beabstandet sind,
c) Inkontaktbringens einer Oberfläche des Anschlussstücks, die der Oberfläche gegenüberliegt, die dem Tiefziehen unterzogen worden ist, mit einer Stromausgangsklemme des elektrochemischen Generators, wobei das Anschlussstück Kupfer oder eine Legierung auf Kupferbasis oder mindestens ein Band, umfassend Kupfer oder eine Legierung auf Kupferbasis, einer Elektrode des elektrochemischen Generators umfasst,
d) Sendens eines Laserstrahls, der auf die Oberfläche des Anschlussstücks gerichtet ist, die dem Tiefziehen unterzogen worden ist.

10. Verfahren nach Anspruch 9, wobei die Abdrücke von dreieckigem Querschnitt für eine Ansicht in einem Querschnitt des Anschlussstücks sind.

11. Verfahren nach einem der Ansprüche 9 bis 10, wobei die Fläche des tiefgezogenen Abschnitts größer als oder gleich der Fläche der Oberfläche ist, die den Laserstrahl in Schritt d) empfängt.

## Claims

1. A secondary cell comprising:
a) a current output terminal (2) comprising copper or a copper-based alloy;
b) a connecting piece (8) for connecting electrodes (5) of the secondary cell (1) to the current output terminal (2) of the secondary cell, said connecting piece comprising copper or a copper-based alloy and being welded by laser welding to:
- at least one foil comprising copper or a copper-based alloy of an electrode of said secondary cell and/or
- to the current output terminal,
said connecting piece having:
a first surface of which at least one portion comprises a plurality of indentations (9) regularly spaced along two directions situated in the plane defined by said surface;
a second surface opposite to the first surface, in contact with the said at least one foil and/or with the said current output terminal,
laser welding taking place on the plurality of indentations.

2. The secondary cell according to claim 1, wherein the connecting piece is a metal strip having two faces, the first face having the plurality of indentations and the second face being welded to the current output terminal.

3. The secondary cell according to claim 1 or 2, wherein the indentations have a triangular, half-spherical, trapezoidal, rectangular or square cross section for a cross-sectional view of the connecting piece.

4. The secondary cell according to one of claims 1 to 3, wherein the indentations have a triangular cross section, for a cross-sectional view of the connection piece.

5. The secondary cell according to one of the preceding claims, wherein the indentations are spaced by a same distance.

6. The secondary cell according to one of the preceding claims, wherein the depth of the indentations is greater than or equal to 50 microns, preferably greater than or equal to 100 microns.

7. The secondary cell according to one of the preceding claims, wherein the surface area of each indentation measured at surface level of the connecting piece is greater than 10⁻² mm².

8. The secondary cell according to one of claims 1 to 7, of the lithium ion type.

9. A method of manufacturing an electrical connection between:
- a connection piece (8) and at least one foil of an electrode (5) of a secondary cell (1) or
- a connection piece (8) and a current output terminal (2) of the secondary cell, said method comprising the steps of:
a) providing a connection piece comprising copper or a copper-based alloy,
b) stamping a plurality of indentations on at least a portion of a surface of the connection piece, the indentations being spaced evenly in two directions in the plane defined by the surface;
c) contacting a surface of the connecting piece, opposite the surface which was stamped, with a current output terminal of the secondary cell, the current output terminal comprising copper or a copper-based alloy or at least one foil comprising copper or a copper-based alloy of an electrode of the secondary cell,
d) directing a laser beam onto the surface of the connection piece having been subject to the stamping operation.

10. The method of claim 9, wherein the indentations are of triangular cross section, for a cross-sectional view of the connecting piece.

11. The method according to one of claims 9 to 10, wherein the surface area of the stamped portion is greater than or equal to the surface area of the surface receiving the laser beam in step d).
